# EUROPEAN PATENT SPECIFICATION

(11) **EP 2 034 196 B1**
(45) Date of publication and mention of the grant of the patent: **05.09.2012**
(21) Application number: 08252913.2
(22) Date of filing: 02.09.2008
(51) Int. Cl.: F16B 33/00, F16B 43/00

(54) **Fastening apparatus for magnesium component and motorcycle having the same**
Befestigungsvorrichtung für Magnesiumkomponente und Motorrad damit
Dispositif de fixation pour composant de magnésium et motocyclette dotée de celui-ci

(30) Priority: 04.09.2007 JP 2007229058; 08.08.2008 JP 2008205611
(43) Date of publication of application: 11.03.2009
(73) Proprietor: Yamaha Hatsudoki Kabushiki Kaisha, Iwata-shi, Shizuoka 438-8501 (JP)
(72) Inventor: Misuoka, Ryuuta c/o Yamaha Hatsudoki K.K., Shizuoka-ken 438-8501 (JP); Sugiura, Yukihide c/o Yamaha Hatsudoki K.K., Shizuoka-ken 438-8501 (JP); Tominaga, Shuji c/o Yamaha Hatsudoki K.K., Shizuoka-ken 438-8501 (JP)
(74) Representative: Schoppe, Fritz

(56) References cited:
- JP-A- 5 302 614
- JP-A- 2006 077 953
- US-A1- 2001 022 926
- US-B1- 7 150 852

## Description

### Technical Field

The present invention relates to a fastening device for use to fasten a magnesium component and a non-magnesium component using a bolt made of a non-magnesium material, and to a vehicle, for example, a motorcycle having the fastening device (see, for example, US 2001/022926 A1 (JP-A-2001-263314), corresponding to the preamble of claim 1.

### Background Art

Magnesium metallic materials such as magnesium alloys are drawing attention as light materials for use, for example, for components of motorcycles.

Magnesium metallic materials, however, are a low electrochemical potential. Therefore, in the case where a component made from or including a magnesium-based metallic material (hereinafter referred to as a "magnesium component") and a component made of a metallic material that is different from a magnesium-based metallic material (hereinafter referred to as "non-magnesium component") are fastened using a bolt made of a non-magnesium metallic material, the magnesium component and the bolt can occasionally form a cell that can result in unfavorably electrolytic corrosion.

Thus, in order to prevent such electrolytic corrosion, the surface of a magnesium component is often coated with an insulator.

In the fastening structure using a bolt, however, threads formed at the distal end of the bolt occasionally damage the surface of a magnesium component when tightening the bolt. Therefore, the insulator covering the surface of the magnesium component may be partially damaged so as to be unable to perform its insulation function at the damaged portion. This may result in the occurrence of electrolytic corrosion at the damaged portion.

Thus, a proposal has been made to interpose a metal washer 204 having a boss part 203 between a head 201a of a bolt 201 and a magnesium alloy member 202, as shown in FIG. 20 (see the above-mentioned JP-A-2001-263314). The bolt fastening structure disclosed in JP-A-2001-263314 is composed of a general member 205 that is not made of a magnesium alloy, a magnesium alloy member 202 having a hexagonal through hole 206 and coated with an insulator 207, a bossed metal washer 204 with a boss part 203 having a slightly smaller outer diameter than the through hole 206, and a bolt 201. The boss part 203 of the bossed metal washer 204 has a hexagonal outer shape corresponding to the shape of the through hole 206.

JP-A-2001-263314 discloses that with the boss part 203 serving as a guide or guard member, there is no fear of the threads at the distal end of the bolt 201 contacting the inner surface of the through hole 206. It also discloses that with the hexagonal boss part 203 fitted in the hexagonal through hole 206, the metal washer 204 does not rotate together with the bolt 201 when the bolt 201 is rotated, and hence there is no fear of the metal washer 204 damaging the insulator 207.

In general, a metal washer rotates together with a bolt, when tightening the bolt, to perform the function of reducing the loss of tightening torque. In the bolt fastening structure disclosed in JP-A-2001-263314, however, the bossed metal washer 204 does not rotate when the bolt 201 is rotated, and therefore does not fully perform the function as a metal washer. That is, the bossed metal washer 204 disclosed in JP-A-2001-263314 is merely a member for separating the bolt 201 and the magnesium alloy member 202 from each other, and hence unfavorably increases the loss of tightening torque when tightening the bolt 201. Therefore, a sufficient tightening effect cannot be achieved.

The present invention aims to provide a fastening device for use to fasten a magnesium component and a non-magnesium component using a fastener made of a non-magnesium material in which electrolytic corrosion of the magnesium component can be suppressed and the tightening effect of the fastener can be enhanced.

### Summary

Aspects of the invention are defined in the independent product claims 1, 12 and 13. Additional features of the invention are disclosed in the dependent claims.

A first aspect the invention as defined in claim 1 provides a fastening structure for a magnesium component, wherein a non-magnesium component made of a material that is different from a magnesium material, the non-magnesium component being formed with a fastening hole and a magnesium component made of a magnesium material, the magnesium component being formed with a through hole having an inner diameter larger than that of the fastening hole and substantially entirely coated with an insulator are to be fastened to each other. The fastening structure comprises: a fastener made of a material different from a magnesium material, the fastener having a shaft formed with threads at least partially at the distal end of the shaft, and a head provided at a proximal end of the shaft and having a diameter larger than that of the shaft, the fastener being configured to be inserted from the through hole into the fastening hole to fasten the magnesium component and the non-magnesium component; a collar made of a material that generates substantially no electrolytic corrosion when in contact with a magnesium material, the collar being configured to at least partially cover the periphery of the shaft of the fastener to be interposed between the shaft and an inner peripheral surface of the through hole of the magnesium component; and an annular washer made of a material that generates substantially no electrolytic corrosion when in contact with a magnesium material, the washer allowing the shaft of the fastener to pass therethrough to be interposed between the head of the fastener and the magnesium component, in which the washer is separate from the collar.

A second and a third aspect of the invention are defined in claims 12 and 13, respectively.
According to an embodiment of said third aspect,

the invention provides a vehicle having the fastening structure for a magnesium component, wherein the magnesium component is in the form of a rear frame for supporting at least part of a seat on which a rider is to be seated, and a non-magnesium component is in the form of another frame for supporting the rear frame.

According to the present invention as defined in the claims, a fastening apparatus can be used to fasten a magnesium component and a non-magnesium component using a fastener made of a non-magnesium material, wherein electrolytic corrosion of the magnesium component can be suppressed and the tightening effect of the fastener can be enhanced.

### Brief Description of Drawings

Embodiments of the invention are described, by way of example only, with reference to the accompanying drawings.
FIG. 1 is a side view of a motorcycle.
FIG. 2 is a plan view of the motorcycle.
FIG. 3 is a side view of a body frame.
FIG. 4 is a plan view of a rear frame.
FIG. 5 (a) is a cross sectional view taken along the line Va-Va of FIG. 5(b), and FIG. 5(b) is a side view of a front portion of the rear frame.
FIG. 6 is a plan view of a main frame and the rear frame.
FIG. 7 is a perspective view of the vicinity of an upper fastening part of the rear frame.
FIG. 8 is a perspective view of the vicinity of a lower fastening part of the rear frame.
FIG. 9 is a side view of a bolt with a washer and a collar assembled thereto.
FIG. 10 is a front view of the collar.
FIG. 11 is a cross sectional view of a fastening structure between the main frame and the rear frame.
FIG. 12 is a plan view of the rear frame of the motorcycle and a portion at the inner side of the rear frame.
FIG. 13 is a plan view of a battery box.
FIG. 14 is a side view of the battery box.
FIG. 15 (a) is a plan view of a tool band, and FIG. 15 (b) is a cross sectional view taken along the line XVb-XVb of FIG. 15(a).
FIG. 16 is a side view of a seat lock device.
FIG. 17 is a perspective view of a part of the seat lock device.
FIG. 18 is a cross sectional view of a bearing structure.
FIG. 19 is a side view of a bolt etc. according to a modification.

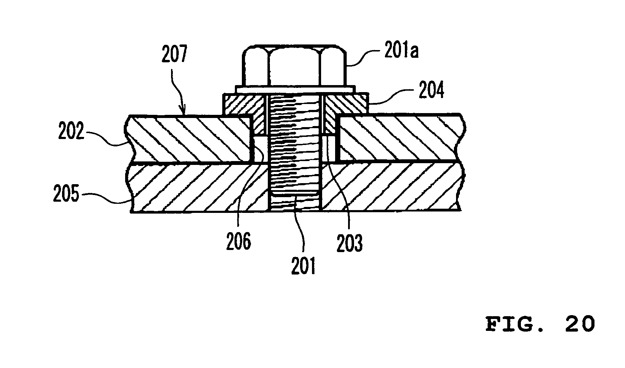

FIG. 20 is a cross sectional view of a conventional fastening structure.
FIG. 21 is a side view of a bolt with a washer and a collar assembled thereto according to a modification.
FIG. 22 is a front view of a collar according to the modification.

### Detailed description

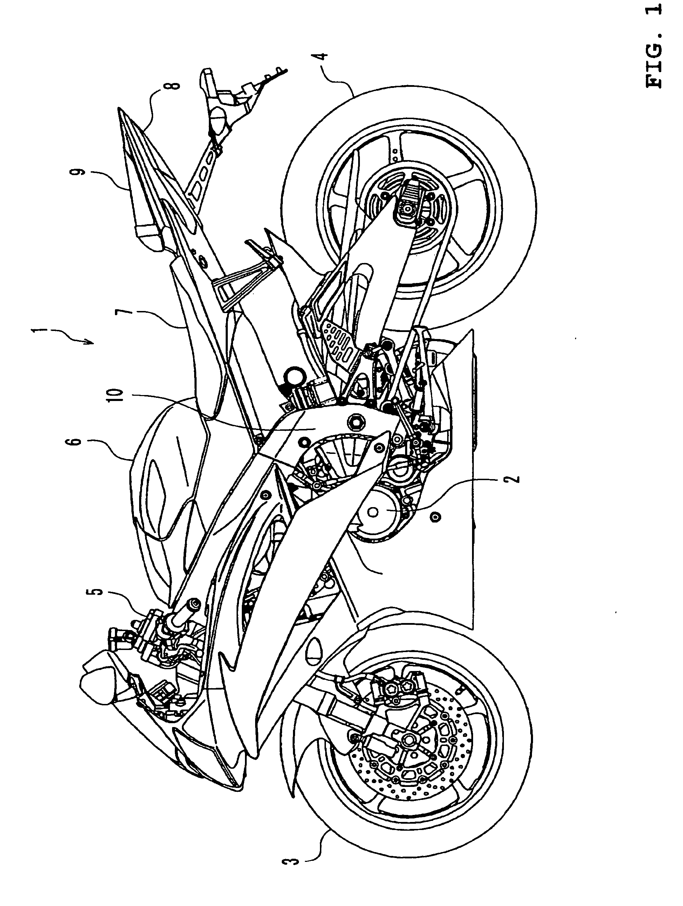

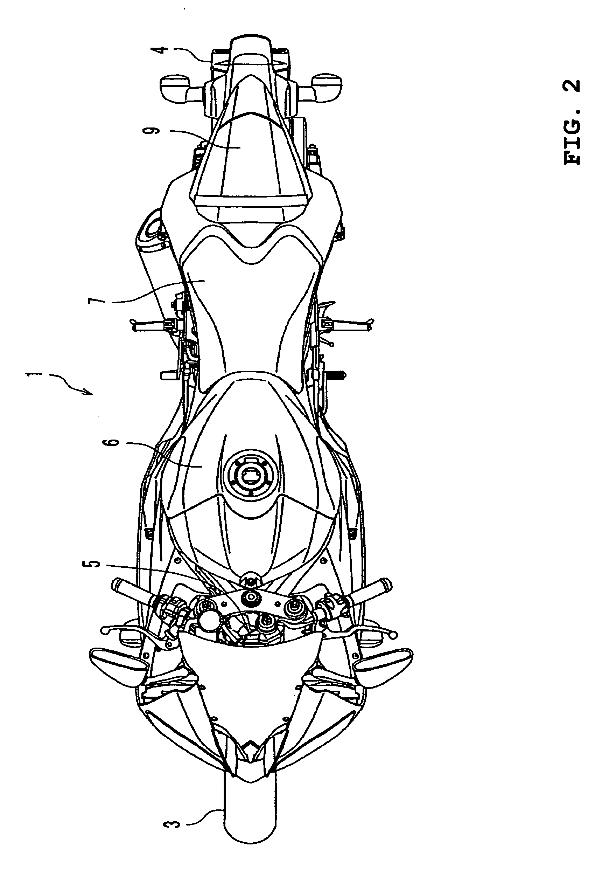

As shown in FIG. 1 and FIG. 2, a motorcycle 1, which is an example of a vehicle, for describing an embodiment of the invention. The motorcycle 1 includes a body frame 10, an engine 2 supported by the body frame 10, a front wheel 3, a rear wheel 4, handlebars 5, a fuel tank 6, a main seat 7, and a tandem seat 9. A tail lamp unit 8 is provided at the rear of the motorcycle 1. The illustrated example of a motorcycle 1 for describing an embodiment of the invention is a motorcycle type vehicle. It should be noted, however, that the invention is not limited to such a motorcycle, or a motorcycle of a specific type, and may be a motocross type motorcycle, a moped, a scooter, another form of straddle-type vehicle, and so forth. The terms indicating directions "front," "rear," "left," and "right" as used in the following description refer to the corresponding directions as seen from the rider seated on the main seat 7.

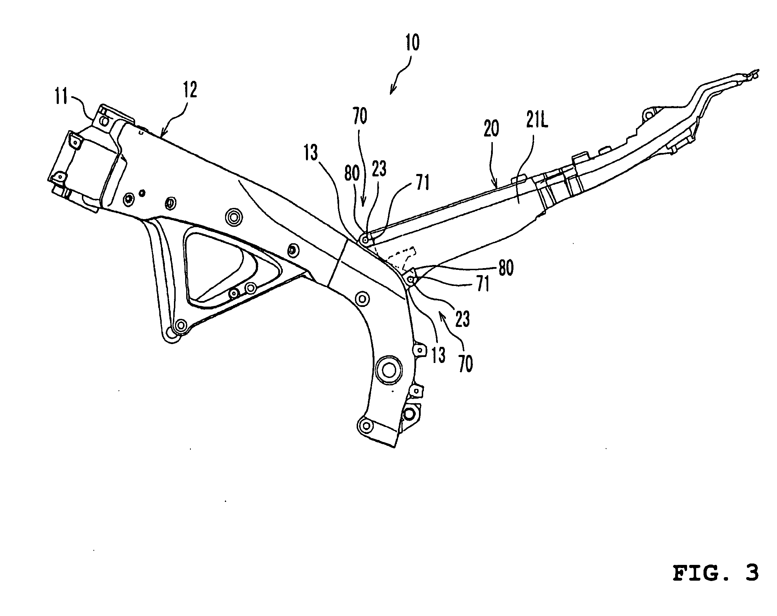

As shown in FIG. 3, the body frame 10 includes a head pipe 11, a main frame 12 extending rearward and obliquely downward from the head pipe 11, and a rear frame 20 extending rearward and obliquely upward from an intermediate portion of the main frame 12. In this embodiment, the rear frame 20 is made of a magnesium alloy, as discussed in detail later.

The main frame 12 is made of a material that is nobler in terms of electrochemical potential than that of the rear frame 20. In this embodiment, the main frame 12 is made of an aluminum alloy. The main frame 12 is provided with a bracket 13 for attachment of the rear frame 20.

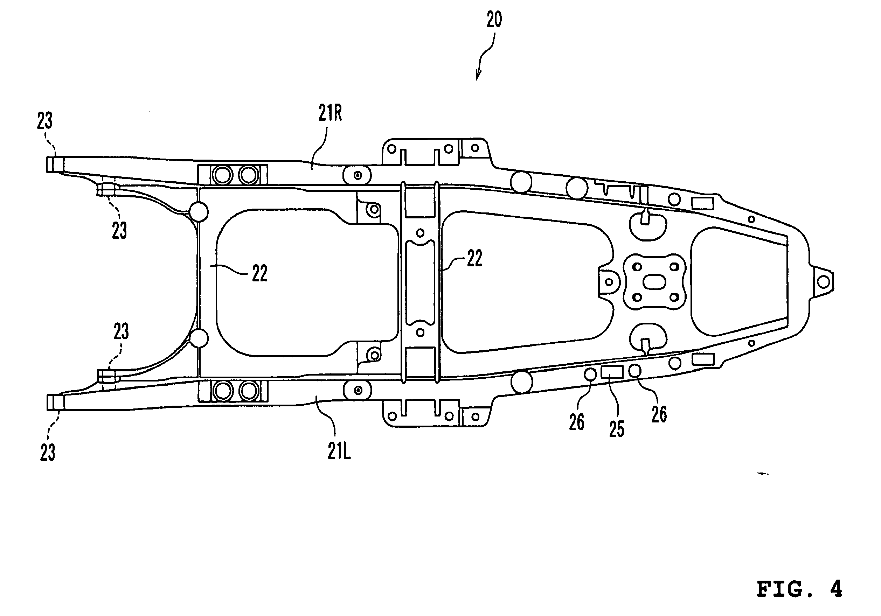

FIG. 4 is a plan view of the rear frame 20. As shown in FIG. 4, the rear frame 20 has a pair of left and right seat rails 21L, 21R, and a cross member 22 for connecting both the seat rails 21L, 21R.

The rear frame 20 is made of a material containing magnesium in an amount of 50 weight percent or more, that is, a magnesium material. The rear frame 20 is preferably made of a material containing magnesium in an amount of 90 weight percent or more and here the rear frame 20 is made of a magnesium alloy. The method for manufacturing the rear frame 20 is not limited to a specific method. In this embodiment, the rear frame 20 is a molded piece of a magnesium alloy.

The surface of the rear frame 20 is coated with an insulator. The insulator may be an insulating material applied to the surface of the rear frame 20, or may be formed by reforming the surface of the base material of the rear frame 20 (that is, the magnesium alloy) so as to provide insulation properties. That is, the insulator may be part of the base material reformed. In this embodiment, the rear frame 20 has been subjected to a surface treatment to prevent electrolytic corrosion. The type of the surface treatment is not specifically limited, and surface treatments such as chromic acid chromate treatment (chromate treatment), phosphoric acid chromate treatment, and phosphoric acid manganese treatment, for example, may be suitably used. Alternatively, an insulating film may be formed over the surface of the rear frame 20 by vapor deposition or the like, or a paint having insulation properties may be applied to the surface of the rear frame 20. By coating the surface of the rear frame 20 with an insulator in this way, electrolytic corrosion of the rear frame 20 can be suppressed .

As shown in FIG. 4, a depression 25 that is recessed downward is formed at a rear portion of the seat rail 21L of the rear frame 20. A screw hole 26 is each formed in front and rear of the depression 25.

As shown in FIG. 3, a fastening part 80 to be fastened to the bracket 13 of the main frame 12 is provided at upper and lower parts of the front end of the seat rail 21L. Although not shown in FIG. 3, the right seat rail 21R is also provided with similar fastening parts 80. Hereinafter, only the fastening part 80 of the left seat rail 21L is described.

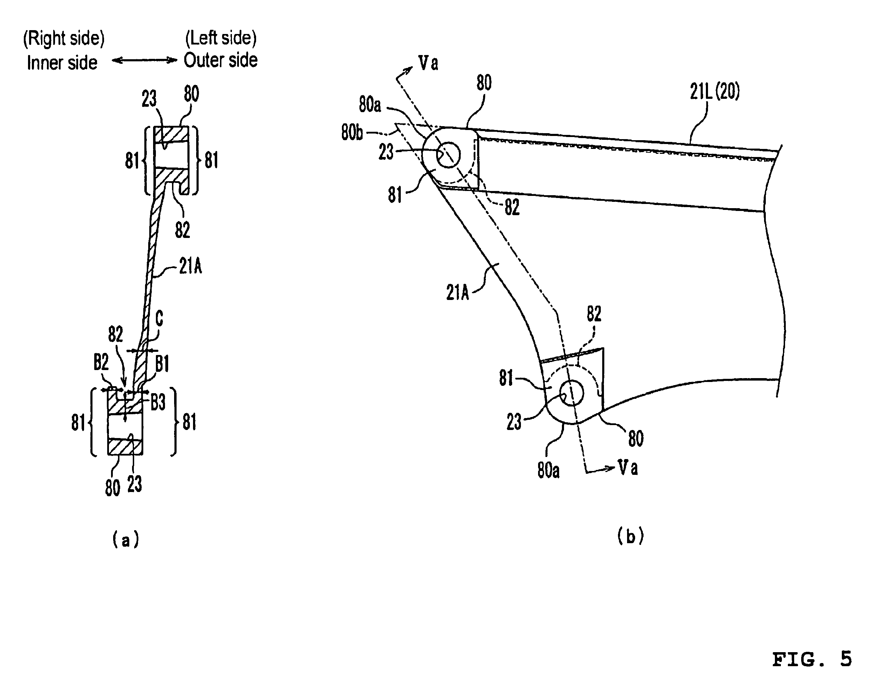

As shown in FIG. 5(a) and FIG. 5(b), the fastening part 80 is continuous with a side part 21A of the rear frame 20 (to be strict, the seat rail 21L), but is wider (that is, larger in the left and right direction) than the side part 21A. A through hole 23 is formed in each of the upper fastening part 80 and the lower fastening part 80. A bearing surface 81 is formed around the through hole 23 at both ends of the fastening part 80 in the left and right direction. As shown in FIG. 5(a), a recess 82 is formed in the fastening part 80. The recess 82 is formed at an outer portion of the fastening part 80 in the radial direction of the through hole 23, and recessed toward the through hole 23. Also, the recess 82 is formed at an intermediate portion of the fastening part 80 in the axial direction of the through hole 23 (in the left and right direction of FIG. 5(a)).

In this embodiment, the upper fastening part 80 and the lower fastening part 80 of the seat rail 21L are respectively positioned on the left and right sides of the side part 21A. Although not shown, the upper fastening part 80 and the lower fastening part 80 of the seat rail 21R are respectively positioned on the right and left sides of the side part 21A. That is, the upper fastening parts 80 are positioned on the outer side of the vehicle, and the lower fastening parts 80 are positioned on the center side of the vehicle. However, the positions of the upper fastening part 80 and the lower fastening part 80 are not specifically limited. The upper fastening part 80 and the lower fastening part 80 may be positioned on the opposite sides to each other with respect to the side part 21A as in this embodiment, or may be positioned on the same side as each other with respect to the side part 21A.

As shown in FIG. 5(a), the thicknesses B1, B2 of both sides of the recess 82 of the fastening part 80 are substantially equal to the thickness C of the side part 21A of the seat rail 21L. The language "substantially equal thickness" as used here refers to a degree of equality at which no solidification cracking occurs when cast. The thickness of the side part 21A of the seat rail 21L varies along the length of the side part 21A. Here, the average thickness of the side part 21A at the front end of the seat rail 21L is adopted as the thickness C of the side part 21A. In this embodiment, the thickness B3 of the fastening part 80 in the radial direction of the through hole 23 (in detail, the distance between the bottom of the recess 82 and the inner peripheral surface of the through hole 23) is also substantially equal to the thickness C of the side part 21A.

If the fastening part 80 had an edged part 80b at an end thereof as shown in FIG. 5(b), the edged part 80b would be extra (a so-called extra portion). In this embodiment, however, an end 80a of the fastening part 80 is rounded, with no edged part 80b provided. By providing no edged part 80b in this way, the fastening part 80 can be prevented from having any thick part. Thus, in this embodiment, no solidification cracking is likely to occur when the rear frame 20 is molded by providing no edged part 80b in addition to forming the recess 82.

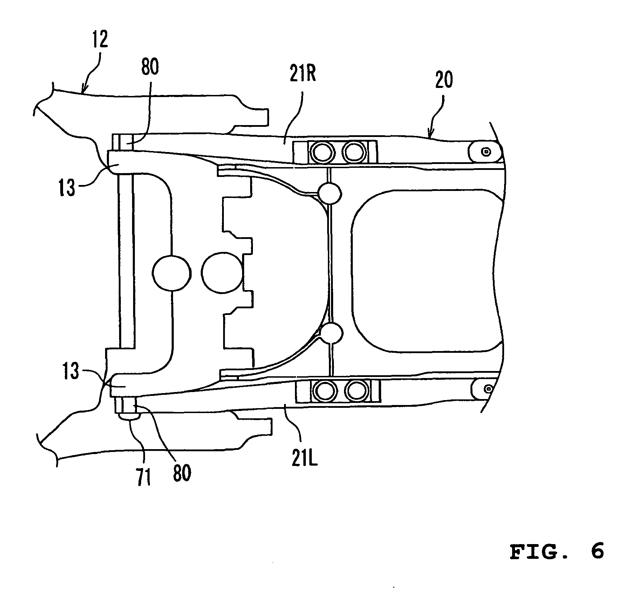

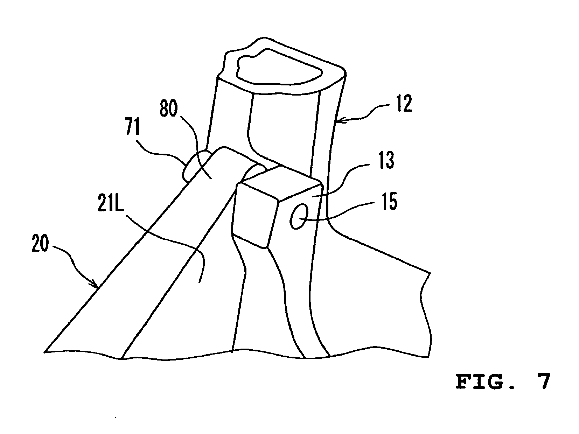

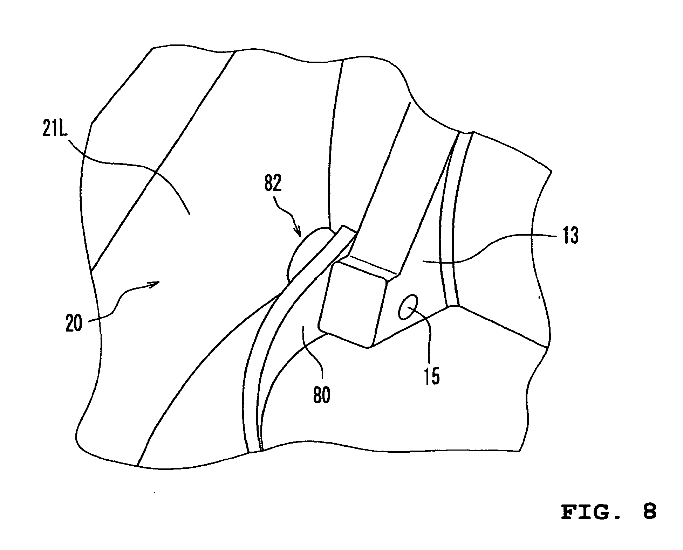

As shown in FIG. 6, FIG. 7, and FIG. 8, the fastening part 80 of the rear frame 20 is fixed to the bracket 13 of the main frame 12 by a bolt 71, as discussed in detail later. That is, the rear frame 20 is fastened to the bracket 13 of the main frame 12 by the bolt 71 inserted through the through hole 23 (see FIG. 5(a)) of the fastening part 80.

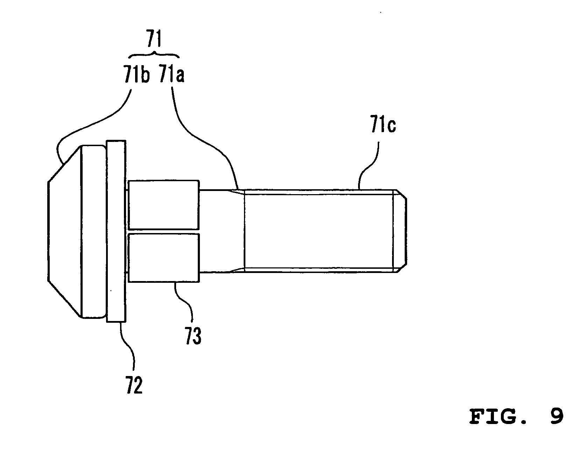

Next, referring to FIG. 9, FIG. 10, and FIG. 11, a description is made of a fastening structure (in other words, a fastening device) 70 between the main frame 12 and the rear frame 20. Since the upper fastening structure 70 and the lower fastening structure of the rear frame 20 are identical to each other, only the upper fastening structure 70 is described hereinafter.

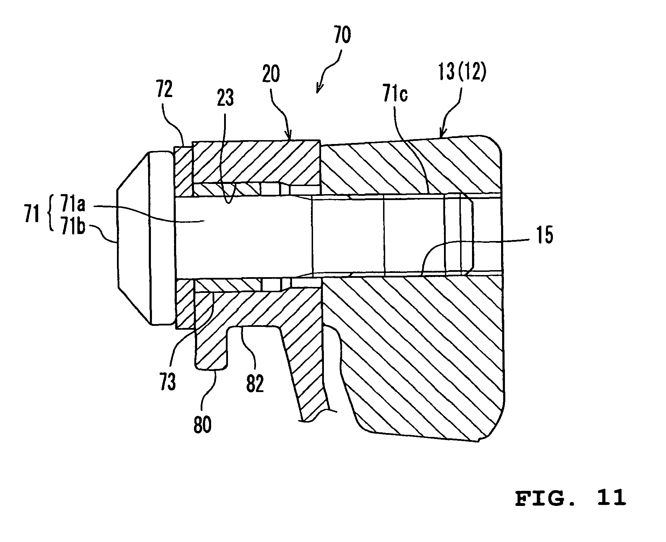

As shown in FIG. 9 and FIG. 11, the fastening structure 70 has a bolt 71, a washer 72, and a collar 73. As discussed above, a through hole 23 is formed in the fastening part 80 of the rear frame 20 (see FIG. 11). A fastening hole 15 is formed in the bracket 13 of the main frame 12. In this embodiment, the fastening hole 15 receives a shaft, or shaft part, 71a of the bolt 71 to be discussed later. Threads (not shown) are formed on the fastening hole 15 of this embodiment. It should be noted, however, that no threads may be formed on the fastening hole 15. The configuration of the fastening hole 15 may be determined appropriately according to the fastener used. The inner diameter of the through hole 23 is larger than that of the fastening hole 15.

The bolt 71 is made of a material different from a magnesium material, and is made of iron in this embodiment. It should be noted, however, that the material of the bolt 71 is not limited to iron and may be other materials such as stainless steel, for example. The bolt 71 has a shaft, of shaft part, 71a formed with threads 71c at least partially at the distal end of the shaft, and a head, or head part, 71b provided at the proximal end of the shaft 71a and having a diameter larger than that of the shaft part 71a.

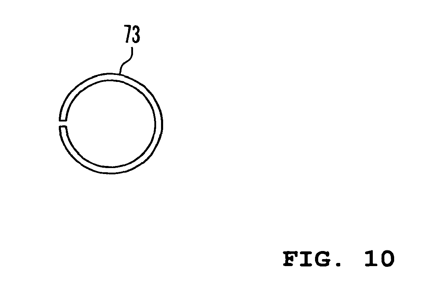

The collar 73 is made of an aluminum material, and made of an aluminum alloy in this embodiment. The collar 73 is configured to partially cover the periphery of the shaft part 71a of the bolt 71 to be interposed between the shaft 71a and the inner peripheral surface of the through hole 23 of the rear frame 20. The specific shape of the collar 73 is not specifically limited. In this embodiment the collar 73 is shorter than an unthreaded portion of the shaft part 71a between the head 71b and the threaded portion 71c of the shaft part 71a of the bolt 71. As a result, as shown in Figure 11, the collar 73 extends only part way along the through hole 23 of the rear frame 20. In this embodiment, the collar 73 is formed to have a C-shaped cross section, as shown in FIG. 10. Before the collar 73 is fitted on the shaft 71a of the bolt 71, the inner diameter of the collar 73 is smaller than the outer diameter of the shaft 71a. Since the collar 73 is formed to have a C-shaped cross section, its diameter can be easily increased by human power. Once the diameter of the collar 73 is enlarged, there occurs restoring force in the direction of reducing its diameter. According to this embodiment, by forming the collar 73 to have a C-shaped cross section in this way, the collar 73 can be easily fitted onto the shaft 71a. That is, when the collar 73 is fitted onto the shaft 71a, the collar 73 can be easily inserted into the shaft 71a by increasing the diameter of the collar 73 with fingers. In addition, after the shaft 71a is inserted into the collar 73, the diameter of the collar 73 is reduced with its own restoring force to be fixed to the shaft 71a by removing the fingers from the collar 73. In this embodiment, the collar 73 is just fitted on the shaft 71a, with no adhesive or the like used. That is, the collar 73 and the shaft 71a are not bonded to each other. It should be noted, however, that the collar 73 and the shaft 71a may be bonded to each other.

The washer 72 is made of an aluminum material, and made of an aluminum alloy in this embodiment. As shown in FIG. 9, the washer 72 is penetrated by the shaft 71a of the bolt 71, and disposed between the head part 71b of the bolt 71 and the collar 73. Also, as shown in FIG. 11, the washer 72 is interposed between the head part 71b and the rear frame 20 after the bolt 71 is fastened. The washer 72 is separate from the collar 73. That is, the washer 72 is separable from the collar 73, and rotatable independently of the collar 73.

When fixing the rear frame 20 to the bracket 13, the through hole 23 of the rear frame 20 and the fastening hole 15 of the bracket 13 are aligned with each other, and then the bolt 71, with the washer 72 and the collar 73 assembled thereto in advance, is screwed through the through hole 23 into the threaded fastening hole 15 in the bracket 13. At this time, since the washer 72 and the collar 73 are separate from each other, the washer 72 does not rotate together with the bolt 71 even if the collar 73 rotates together with the bolt 71. Since the bolt 71 and the washer 72 thus rotate relative to each other when tightening the bolt 71, the loss of tightening torque can be reduced. As mentioned above, in this embodiment the collar 73 is shorter than the unthreaded portion of the shaft part 71a between the head 71b and the threaded portion 71c of the shaft part 71a of the bolt 71, and as the collar 73 extends only part way along the through hole 23 of the rear frame 20. The collar does not therefore impede securing by means of the fastening member, that is the bolt 71, as the bolt 71 is screwed into the threaded fastening hole 15 hole in the bracket 13.

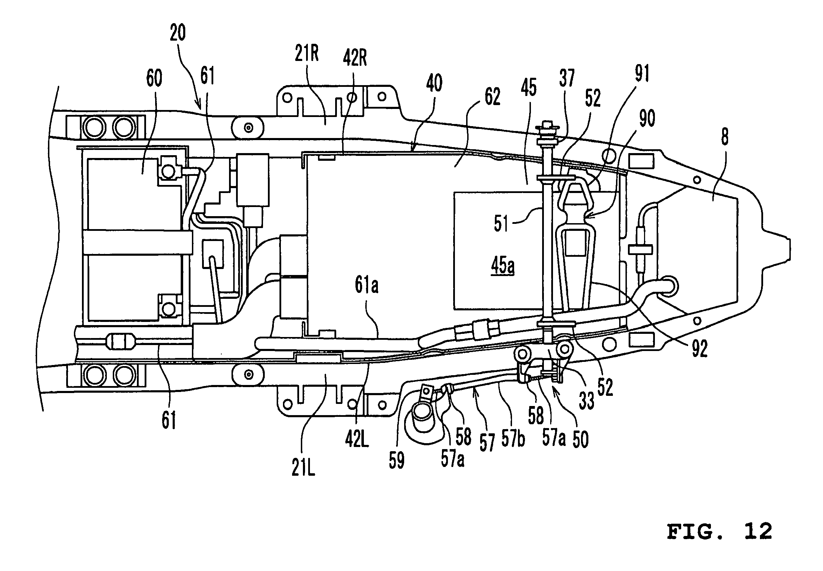

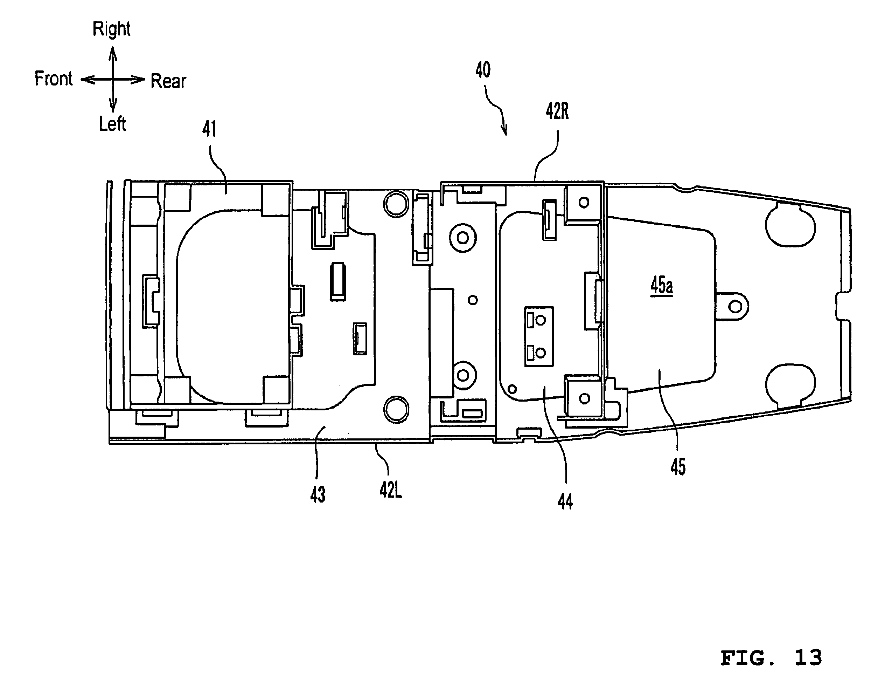

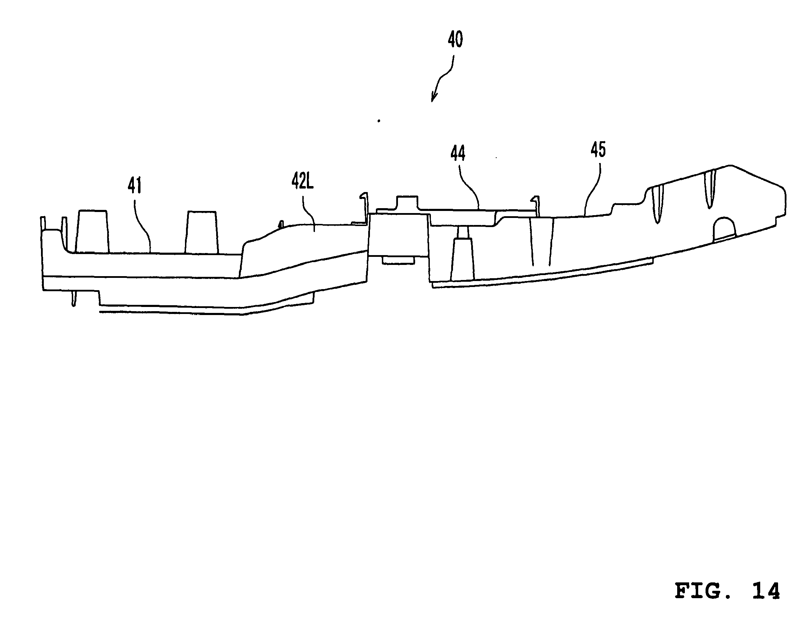

As shown in FIG. 12, a battery box 40 is disposed at the inner side of the rear frame 20. FIG. 13 is a plan view of the battery box 40, and FIG. 14 is a side view of the battery box 40. The battery box 40 is made of a material that causes substantially no electrolytic corrosion when contacted with a magnesium material. The material of the battery box 40 is preferably a nonmetallic material. In this embodiment, the battery box 40 is integrally molded from synthetic resin.

As shown in FIG. 13, the battery box 40 according to this embodiment is longer in the front and rear direction than it is in the left and right direction. The battery box 40 has a battery support part 41 for supporting a battery 60 (see FIG. 12). The battery box 40 also has left and right side plates 42L, 42R extending in the front and rear direction. The side plates 42L, 42R extend upright from a bottom plate 43. The left side plate 42L extends rearward from the left side of the battery support part 41. The right side plate 42R extends in the front and rear direction at a location rearward of the battery support part 41. In this embodiment, the left side plate 42L is positioned at the left end of the battery box 40, and the right side plate 42R is positioned at the right end of the battery box 40. The battery box 40 of this embodiment has no portion projecting leftward of the left side plate 42L, or no portion projecting rightward of the right side plate 42R. It should be noted, however, that the shape of the battery box 40 is not specifically limited.

As shown in FIG. 12, the battery box 40 is disposed above the cross member 22 (see FIG. 4) of the rear frame 20 and on the inner side of the seat rails 21L, 21R. The right side plate 42R covers the left side of the right seat rail 21R. On the other hand, the left side plate 42L covers the right side of the left seat rail 21L. That is, the side plates 42L, 42R are respectively disposed to cover the sides of the seat rails 21L, 21R on the inner side of the vehicle and extend along the seat rails 21L, 21R.

As shown in FIG. 13, the battery box 40 according to this embodiment additionally has an ECU support part 44 for supporting an electronic control unit (ECU) 62 (see FIG. 12). The ECU support part 44 is provided rearward of the battery support part 41. In other words, a rear portion of the battery support part 41 extends rearward to compose the ECU support part 44.

In rear of the ECU support part 44 in the battery box 40 is provided a tool box part 45 defining a space 45a for accommodating tools (hereinafter referred to as "tool accommodation space"). The tool box part 45 is recessed downward to accommodate various tools therein. In this embodiment, as described above, a rear portion of the battery support part 41 extends further rearward to compose the tool box part 45.

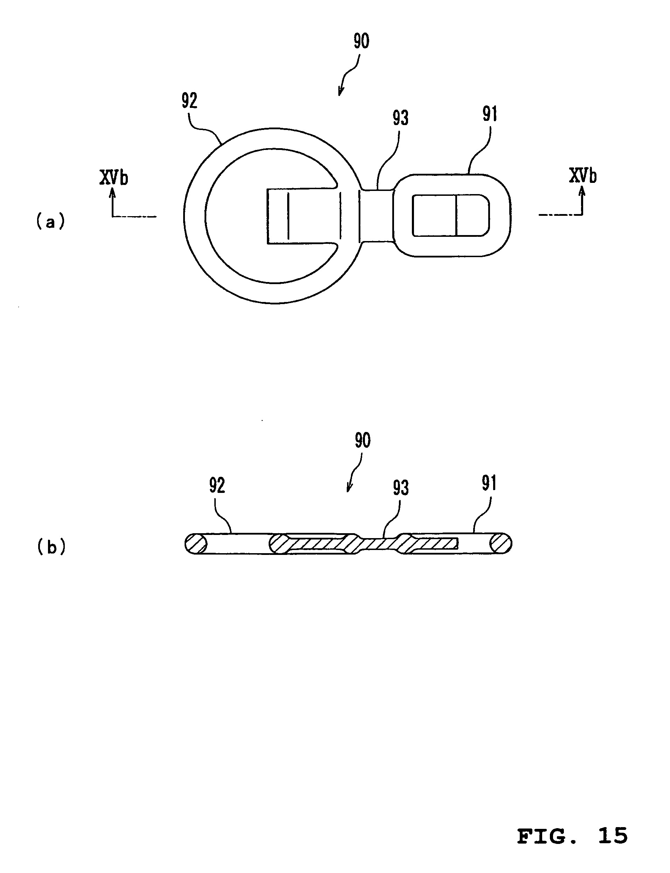

In FIG. 12, reference numeral 90 denotes a tool band. The tool band 90 presses for fixation tools and so forth accommodated in the tool box part 45. In this embodiment, the tool band 90 is integrally molded from rubber, as shown in FIG. 15 (a) and FIG. 15(b). That is, the entirety of the tool band 90 is made of rubber. The tool band 90 has a first retention ring 91, a second retention ring 92, and a coupling part 93 coupling the first retention ring 91 and the second retention ring 92.

As shown in FIG. 12, a plurality of harnesses 61 are connected to the battery 60. Some harnesses 61a extend in the front and rear direction along the seat rail 21L on the inner side of the left seat rail 21L. The harnesses 61a extend from the battery 60 to the tail lamp unit 8.

The language "extend in the front and rear direction" as used herein means that the subject extends in the front and rear direction as a whole. Therefore, the subject is described to "extend in the front and rear direction" in the case where the subject as a whole extends in the front and rear direction even if it is partially curved or bent. In addition to extending in the front and rear direction in a strict sense, to "extend in the front and rear direction" includes the case where the subject extends obliquely in the front and rear direction partially or entirely.

According to this embodiment, although the harnesses 61a are disposed along the seat rail 21L as described above, the side plate 42L of the battery box 40, which is interposed between the seat rail 21L and the harnesses 61a, prevents contact between the harnesses 61a and the seat rail 21L.

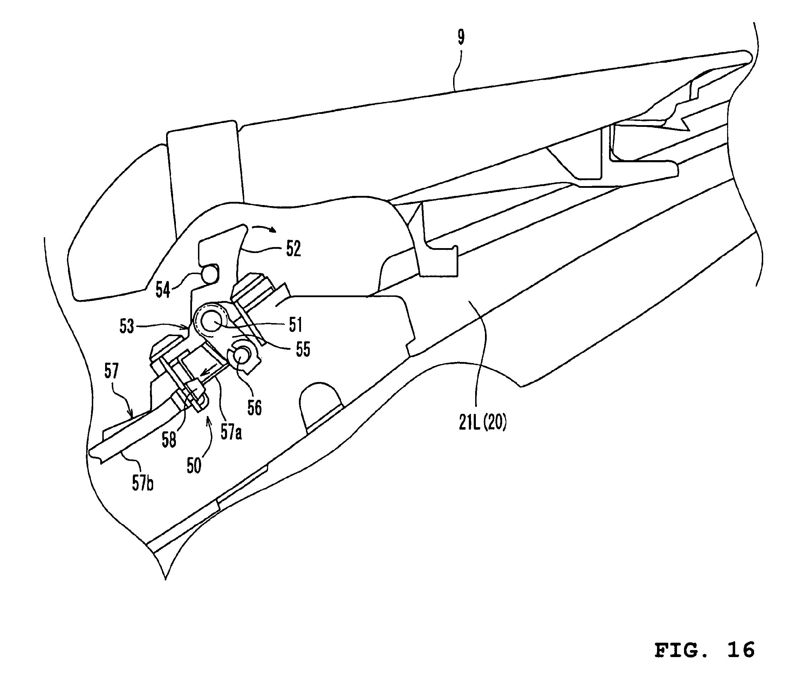

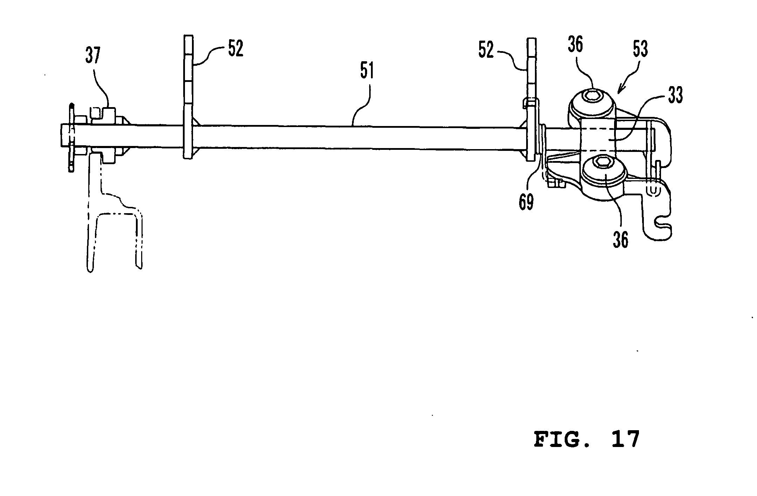

The tandem seat 9 (see FIG. 1) is formed to be removable. As shown in FIG. 16 and FIG. 17, the motorcycle 1 is provided with a seat lock device 50 for locking the tandem seat 9. The seat lock device 50 includes a rotary shaft 51 extending in the left and right direction, a hook 52 attached to the rotary shaft 51 for rotation together with the rotary shaft 51, a bearing structure 53 for supporting the rotary shaft 51 on the seat rail 21L for free rotation, and a lock bar 54 for engagement with the hook 52. Although not shown, the lock bar 54 is fixed to the inner side of the tandem seat 9. Therefore, the hook 52 can indirectly engage with the tandem seat 9 via the lock bar 54. It should be noted, however, that the hook 52 may be able to engage with part of the tandem seat 9, or in other words, be able to directly engage with the tandem seat 9.

As shown in FIG. 16, one end of a lever 55, which rotates together with the rotary shaft 51, is attached to the rotary shaft 51. An engagement element 56 is in engagement with the other end of the lever 55 for free rotation. The seat lock device 50 includes a cable 57 having an inner wire 57a and an outer tube 57b. One end of the outer tube 57b is fixed by a stopper 58. One end of the inner wire 57a projects from the one end of the outer tube 57b. The one end of the inner wire 57a is fixed to the engagement element 56. As shown in FIG. 12, the other end (that is, the end at the front side) of the outer tube 57b is also fixed by a stopper 58. The other end of the inner wire 57a also projects from the other end of the outer tube 57b. The other end of the inner wire 57a is in engagement with a lever 59.

To unlock the tandem seat 9, the lever 59 is rotated to pull the inner wire 57a toward the other end (that is, forward) . Then, as shown in FIG. 16, the engagement element 56, which is fixed to the one end of the inner wire 57a, is pulled toward the other end, through which the lever 55 rotates in the clockwise direction in FIG. 16. As a result, the rotary shaft 51 also rotates in the clockwise direction. This also rotates the hook 52, which is attached to the rotary shaft 51, in the clockwise direction, which detaches the hook 52 from the lock bar 54 to unlock the tandem seat 9. As shown in FIG. 17, the hook 52 is attached with a spring 69 for urging the hook 52 toward its lock position. The term "lock position" refers to the position where the hook 52 is in engagement with the lock bar 54 (that is, the position where the hook 52 is in FIG. 16). When the lever 59 (see FIG. 12) is released from a hand, the spring 69 restores the hook 52 to the lock position. At the same time, the inner wire 57a is pulled toward the one end, which restores the lever 59 to its initial position.

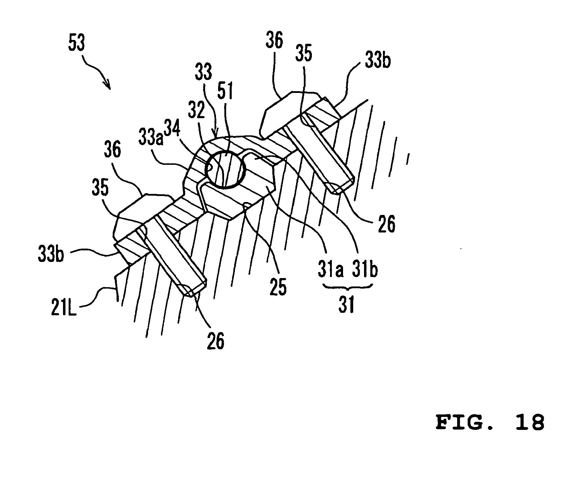

As shown in FIG. 12 and FIG. 17, the left end of the rotary shaft 51 is supported by the bearing structure 53 for free rotation. The right end of the rotary shaft 51 is supported by a bearing 37 for free rotation. Next, referring to FIG. 18, a description is made of the bearing structure 53 for supporting the rotary shaft 51 of the seat lock device 50 for free rotation.

As discussed above, a recess 25 that is recessed downward is formed at the seat rail 21L of the rear frame 20 (see also FIG. 4). A screw hole 26 is each formed in front and rear of the recess 25.

A bearing member 31 is fitted in the recess 25. The bearing member 31 is made of a material that generates substantially no electrolytic corrosion when in contact with a magnesium material. The material that generates substantially no electrolytic corrosion when in contact with a magnesium material may be a material with a small electric potential difference from a magnesium material, or an insulating material (such as resin, rubber, anodized aluminum film, and paint film, for example). In this embodiment, the bearing member 31 is made of a non-metallic material, specifically a resin material. It should be understood, however, that the material of the bearing member 31 is not limited to a resin material. A lower portion 31a of the bearing member 31 is fitted in the depression 25 of the seat rail 21L. In this embodiment, the depression 25 is formed to have a cross section in the shape of an inverted trapezoid, and the lower portion 31a of the bearing member 31 has a cross section in the shape of an inverted trapezoid that is in accordance with the cross sectional shape of the depression 25. An upper portion 31b of the bearing member 31 generally has a cross section in the shape of a trapezoid that is vertically symmetrical to the lower portion 31a. An arc-shaped depression 32 is formed in the upper surface of the upper portion 31b.

The rotary shaft 51 is supported in the depresssion 32 of the bearing member 31. The rotary shaft 51 is made of a metallic material that is nobler in terms of electrochemical potential than magnesium. In this embodiment, the rotary shaft 51 is made of an iron material.

A holding member 33 made of an aluminum material is disposed on the rotary shaft 51. In this embodiment, the holding member 33 is made of an aluminum alloy. A middle part 33a of the holding member 33 is formed in an arcuate shape. An arc-shaped depression 34 that is recessed upward is formed on the lower side of the middle part 33a. An upper portion of the rotary shaft 51 is fitted in the depression 34. This allows the rotary shaft 51 to be held between the depression 34 of the holding member 33 and the depresssion 32 of the bearing member 31 and supported for free rotation. A flat part 33b formed with a screw hole 35 is provided at both front and rear sides of the holding member 33. The lower surface of the flat part 33b is in contact with the upper surface of the seat rail 21L. Although the holding member 33 and the seat rail 21L are in direct contact with each other, substantially no electrolytic corrosion is generated on the seat rail 21L since the holding member 33 is made of an aluminum alloy.

A screw 36 is each inserted into the screw hole 35 of the holding member 33 and the screw hole 26 of the seat rail 21L. The screws 36 fix the holding member 33 to the seat rail 21L. With the holding member 33 fixed to the seat rail 21L, the rotary shaft 51 and the bearing member 31 are held between the holding member 33 and the seat rail 21L. In other words, the rotary shaft 51 is pressed toward the bearing member 31 by the holding member 33 to be supported by the bearing member 31 for free rotation.

As has been described above, in the fastening structure 70 according to this embodiment for fastening the rear frame 20 made of an aluminum alloy using the bolt 71 made of iron, the collar 73 made of an aluminum alloy is interposed between the shaft 71a of the bolt 71 and the inner peripheral surface of the through hole 23 of the rear frame 20. Further, the washer 72 made of an aluminum alloy is interposed between the head part 71b of the bolt 71 and the surface of the rear frame 20. Thus, direct contact between the bolt 71 and the rear frame 20 can be avoided, thereby preventing electrolytic corrosion of the rear frame 20.

In addition, since the washer 72 and the collar 73 are separate from each other, the washer 72 can rotate relative to the bolt 71 even if the bolt 71 and the collar 73 rotate together with each other when fastening the bolt 71. Since the bolt 71 and the washer 72 can thus rotate relative to each other when fastening the bolt 71, the loss of tightening torque can be reduced compared to the case where the bolt 71 and the washer 72 rotate together with each other. Hence, the tightening effect of the bolt 71 can be enhanced.

As described above, according to the fastening structure 70 according to this embodiment, electrolytic corrosion of the rear frame 20 made of a magnesium alloy can be suppressed and the tightening effect of the bolt 71 can be enhanced.

Further, according to this embodiment, the collar 73 is a generally ring-shaped member having a C-shaped cross section. Therefore, the collar 73 can be easily assembled to the bolt 71.

In the above embodiment, the collar 73 is simply fitted on the shaft 71a of the bolt 71. However, the way of assembling the collar 73 to the shaft 71a of the bolt 71 is not specifically limited. For example, the collar 73 may be press-fitted on the shaft 71a of the bolt 71. In this case, the bolt 71 and the collar 73 can be securely fixed to each other with the bolt 71 and the washer 72 rotatable relative to each other. By adopting such a configuration, the bolt 71, the washer 72, and the collar 73 can be treated as one shoulder bolt. Thus, it is possible to prevent the omission of assembling the washer 72 to the bolt 71 when the rear frame 20 is assembled to the bracket 13 of the main frame 12, thereby improving the reliability of the fastening structure 70.

Alternatively, the collar 73 may be bonded or welded to the bolt 71. Also in this case, the bolt 71 and the collar 73 can be securely fixed to each other with the bolt 71 and the washer 72 rotatable relative to each other. Thus, the same effect as the above modification 1 can be obtained.

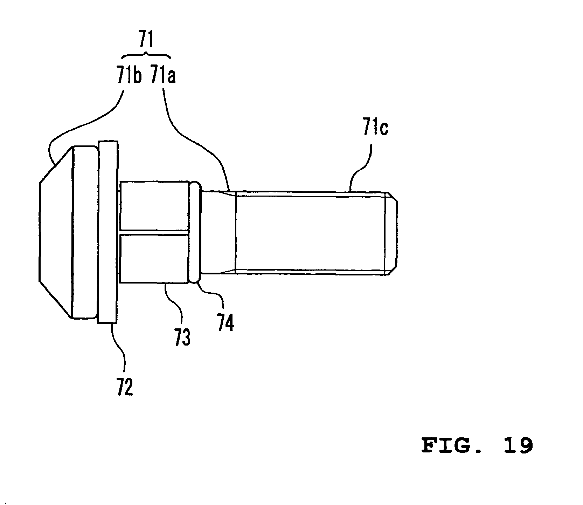

As shown in FIG. 19, an O-ring 74 may be disposed on a portion of the shaft 71a of the bolt 71 that is closer to the distal end side thereof than the collar 73 is. In this case, the rear frame 20 and the bracket 13 of the main frame 12 can be strongly fixed to each other. In addition, it is made difficult for dust or water to enter the gap between the outer peripheral surface of the collar 73 and the inner peripheral surface of the through hole 23 of the rear frame 20, and the gap between the inner peripheral surface of the collar 73 and the outer peripheral surface of the shaft 71a of the bolt 71. Thus, the reliability of the fastening structure 70 can be further improved.

In the above embodiment, the collar 73 is made of an aluminum alloy. However, the collar 73 is not limited to being made of an aluminum material. The collar 73 may be made of any material that generates substantially no electrolytic corrosion when in contact with a magnesium material. For example, the collar 73 may be made of a polyamide resin. Alternatively, the collar 73 may be made of a polyacetal resin.

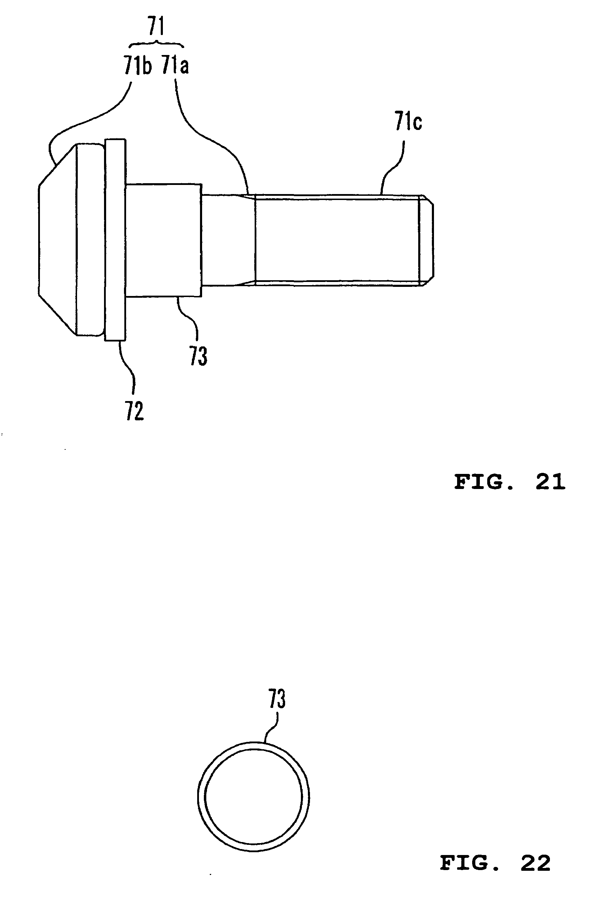

In the above embodiment, the collar 73 is formed to have a C-shaped cross section. However, the collar 73 may have a generally circular cross section. In this case, the collar 73 may desirably be made of an elastic material. As shown in FIG. 21 or FIG. 22, in this modification, the collar 73 is formed to have a generally circular cross section. Before the collar 73 is fitted on the shaft 71a of the bolt 71, the inner diameter of the collar 73 is smaller than the outer diameter of the shaft 71a. Meanwhile, the collar 73 is made of an elastic material. Therefore, the diameter of the collar 73 can be easily increased by human power. Once the diameter of the collar 73 is enlarged, there occurs restoring force in the direction of reducing its diameter. Since the collar 73 is made of an elastic material as described above, the collar 73 can be easily fitted onto the shaft 71a. That is, when the collar 73 is fitted onto the shaft 71a, the collar 73 can be easily inserted into the shaft 71a by increasing the diameter of the collar 73 with fingers. In this event, the collar 73 is moved to the position where the collar 73 abuts against the end face of the washer 72 in the axial direction of the shaft 71a. In addition, after the shaft 71a is inserted into the collar 73, the diameter of the collar 73 is reduced with its own restoring force to be fixed to the shaft 71a by removing the fingers from the collar 73. As in the above embodiment, the collar 73 is just fitted on the shaft 71a, with no adhesive or the like used. That is, the collar 73 and the shaft 71a are not bonded to each other. It should be noted, however, that the collar 73 and the shaft 71a may be bonded to each other.

In the above embodiment, the washer 72 is made of an aluminum alloy. However, the washer 72 is not limited to being made of an aluminum material. The washer 72 may be made of any material that generates substantially no electrolytic corrosion when in contact with a magnesium material. For example, the washer 72 may be made of a resin material. In addition, the collar 73 and the washer 72 may be made of the same material as each other, or may be made of different materials from each other.

In the above embodiment, the holding member 33 of the bearing structure 53 shown in FIG. 18 and so forth is made of an aluminum alloy. However, the holding member 33 is not limited to being made of an aluminum alloy. The holding member 33 may be made of any material that generates substantially no electrolytic corrosion when in contact with a magnesium material.

The term "magnesium material" as used herein refers to a material containing magnesium in an amount of 50 weight percent or more, typically a material containing magnesium in an amount of 90 weight percent or more.

The language "coated with an insulator" as used herein refers not only to the case where the base material is applied with another material having insulation properties, but also to the case where the base material is subjected to a surface treatment to impart insulation properties to the surface of the base material. The language "coated with an insulator substantially entirely" means that the entirety of the subject may not necessarily be covered with an insulator.

The term "fastener" refers to a member for fastening a plurality of members, including a bolt, a screw, and the like, for example.

The present invention finds application to a fastening device, assembly or apparatus for use to fasten a magnesium component and a non-magnesium component using a bolt made of a non-magnesium material, and to a motorcycle having the fastening device.
1: motorcycle
7: main seat (seat)
12: main frame (non-magnesium component)
15: fastening hole
20: rear frame (magnesium component)
23: through hole
71: bolt (fastener)
71a: shaft
71b: head part
72: washer
73: collar
74: O-ring

## Claims

1. A fastening apparatus for a magnesium component (20), wherein a non-magnesium component (12) made of a material that is different from a magnesium material, the non-magnesium component (12) being formed with a fastening hole (15) and a magnesium component (20) made of a magnesium material, the magnesium component (20) being formed with a through hole (23) having an inner diameter larger than that of the fastening hole (15) and substantially entirely coated with an insulator, are to be fastened to each other, the fastening apparatus comprising:
a fastener (71) made of a material different from a magnesium material, the fastener (71) having a shaft (71a) formed with threads (71c) at least partially at a distal end of the shaft (71a), and a head part (71b) provided at a proximal end of the shaft (71a) and having a diameter larger than that of the shaft (71a), and the fastener (71) being configured to be inserted from the through hole (23) into the fastening hole (15) to fasten the magnesium component (20) and the non-magnesium component (12); and
an annular washer (72) made of a material that exhibits substantially no electrolytic corrosion when in contact with a magnesium material, the washer (72) allowing the shaft (71a) of the fastener (71) to pass therethrough to be interposed between the head part (71b) of the fastener (71) and the magnesium component (20),
**characterized by**
a collar (73) made of a material that exhibits substantially no electrolytic corrosion when in contact with a magnesium material, the collar (73) being configured to at least partially cover the periphery of the shaft (71a) of the fastener (71) to be interposed between the shaft (71a) and an inner peripheral surface of the through hole (23) of the magnesium component (20);
wherein the washer (72) is separate from the collar (73).

2. The fastening apparatus according to claim 1,
wherein the collar (73) is a generally ring-shaped member having a C-shaped cross section.

3. The fastening apparatus according to claim 1 or claim 2,
wherein the collar (73) is press-fitted on the shaft (71a) of the fastener (71).

4. The fastening apparatus according to claim 1 or claim 2,
wherein the collar (73) is bonded or welded to the shaft (71a) of the fastener (71).

5. The fastening apparatus according to any one of the preceding claims, wherein the shaft (71a) of the fastener (71) has an unthreaded portion intermediate the head (71b) of the fastener (71) and the threads (71c).

6. The fastening apparatus according to claim 5, wherein the collar (73) extends part way along the unthreaded portion of the fastener (71).

7. The fastening apparatus according to any one of the preceding claims, further comprising:
an O-ring disposed at a portion of the shaft (71a) of the fastener (71) that is closer to the distal end thereof than the collar (73).

8. The fastening apparatus according to any one of the preceding claims,
wherein the non-magnesium component (12) is made of an aluminum material, and
the fastener (71) is made of an iron material or a stainless steel material.

9. The fastening apparatus according to any one of the preceding claims,
wherein the collar (73) is made of a resin material.

10. The fastening apparatus according to any one of the preceding claims,
wherein the washer (72) is made of a resin material.

11. The fastening apparatus according to any one of claims 1 to 8,
wherein the collar (73) and the washer (72) are made of an aluminum material.

12. An assembly comprising:
a non-magnesium component (12) made of a material that is different from a magnesium material, the non-magnesium component (12) being formed with a fastening hole (15); and
a magnesium component (20) made of a magnesium material, the magnesium component (20) being formed with a through hole (23) having an inner diameter larger than that of the fastening hole (15) and substantially entirely coated with an insulator;
**characterized by**
a fastening apparatus according to any one of the preceding claims fastening the non-magnesium component (12) and the magnesium component (20).

13. A vehicle including the assembly of claim 12.

14. The vehicle of claim 13, wherein:
the vehicle is a straddle-type vehicle,
the magnesium component (20) is a rear frame for supporting at least part of a seat on which a rider is to be seated, and the non-magnesium component (12) is another frame for supporting the rear frame.

15. The vehicle of claim 14, wherein the vehicle is a motorcycle.

## Patentansprüche

1. Eine Befestigungsvorrichtung für eine Magnesiumkomponente (20), wobei eine Nicht-Magnesium-Komponente (12), die aus einem Material hergestellt ist, das sich von einem Magnesiummaterial unterscheidet, wobei die Nicht-Magnesium-Komponente (12) mit einem Befestigungsloch (15) gebildet ist, und eine aus einem Magnesiummaterial hergestellte Magnesiumkomponente (20), wobei die Magnesiumkomponente (20) mit einem Durchgangsloch (23) gebildet ist, das einen größeren Innendurchmesser aufweist als das Befestigungsloch (15) und im Wesentlichen ganz mit einem Isolator beschichtet ist, aneinander zu befestigen sind, wobei die Befestigungsvorrichtung folgende Merkmale aufweist:
ein Befestigungselement (71), das aus einem Material, das kein Magnesiummaterial ist, hergestellt ist, wobei das Befestigungselement (71) eine Welle (71a), die an einem distalen Ende der Welle (71 a) zumindest teilweise mit Gewinden (71c) gebildet ist, und ein Kopfteil (71b), das an einem proximalen Ende der Welle (71 a) vorgesehen ist und einen größeren Durchmesser als die Welle (71a) aufweist, aufweist, und das Befestigungselement (71) dazu konfiguriert ist, von dem Durchgangsloch (73) in das Befestigungsloch (15) eingeführt zu werden, um die Magnesiumkomponente (20) und die Nicht-Magnesium-Komponente (12) zu befestigen; und
eine ringförmige Unterlegscheibe (72), die aus einem Material hergestellt ist, das im Wesentlichen keine elektrolytische Korrosion aufweist, wenn es mit einem Magnesiummaterial in Kontakt ist, wobei die Unterlegscheibe (72) ermöglicht, dass die Welle (71 a) des Befestigungselements (71), die durch dieselbe hindurch gelangen soll, um zwischen dem Kopfteil (71) des Befestigungselements (71) und der Magnesiumkomponente (20) angeordnet zu werden,
**gekennzeichnet durch**
eine Muffe (73), die aus einem Material hergestellt ist, das im Wesentlichen keine elektrolytische Korrosion aufweist, wenn es mit einem Magnesiummaterial in Kontakt ist, wobei die Muffe (73) dazu konfiguriert ist, den Umfang der Welle (71 a) des Befestigungselements (71), das zwischen der Welle (71a) und einer inneren Umfassungsoberfläche des Durchgangslochs (23) der Magnesiumkomponente (20) angeordnet werden soll, zumindest teilweise zu bedecken;
wobei die Unterlegscheibe (72) von der Muffe (73) getrennt ist.

2. Die Befestigungsvorrichtung gemäß Anspruch 1, bei der die Muffe (73) ein allgemein ringförmiges Bauglied ist, das einen C-förmigen Querschnitt aufweist.

3. Die Befestigungsvorrichtung gemäß Anspruch 1 oder Anspruch 2, bei der die Muffe (73) mittels Presspassung auf die Welle (71 a) des Befestigungselements (71) aufgebracht ist.

4. Die Befestigungsvorrichtung gemäß Anspruch 1 oder Anspruch 2, bei der die Muffe (73) an die Welle (71a) des Befestigungselements (71) geklebt oder geschweißt ist.

5. Die Befestigungsvorrichtung gemäß einem der vorhergehenden Ansprüche, bei der die Welle (71a) des Befestigungselements (71) einen gewindefreien Abschnitt zwischen dem Kopf (71 b) des Befestigungselements (71) und den Gewinden (71 c) aufweist.

6. Die Befestigungsvorrichtung gemäß Anspruch 5, bei der sich die Muffe (73) teilweise entlang des gewindefreien Abschnitts des Befestigungselements (71) erstreckt.

7. Die Befestigungsvorrichtung gemäß einem der vorhergehenden Ansprüche, die ferner folgendes Merkmal aufweist:
einen O-Ring, der an einem Abschnitt der Welle (71a) des Befestigungselements (71) angeordnet ist, der sich näher bei dem distalen Ende desselben befindet als die Muffe (73).

8. Die Befestigungsvorrichtung gemäß einem der vorhergehenden Ansprüche,
bei der die Nicht-Magnesium-Komponente (12) aus einem Aluminiummaterial hergestellt ist, und
das Befestigungselement (71) aus einem Eisenmaterial oder aus einem Edelstahlmaterial hergestellt ist.

9. Die Befestigungsvorrichtung gemäß einem der vorhergehenden Ansprüche,
bei der die Muffe (73) aus einem Harzmaterial hergestellt ist.

10. Die Befestigungsvorrichtung gemäß einem der vorhergehenden Ansprüche,
bei der die Unterlegscheibe (72) aus einem Harzmaterial hergestellt ist.

11. Die Befestigungsvorrichtung gemäß einem der Ansprüche 1 bis 8,
bei der die Muffe (73) und die Unterlegscheibe (72) aus einem Aluminiummaterial hergestellt sind.

12. Eine Anordnung, die folgende Merkmale aufweist:
eine Nicht-Magnesium-Komponente (12), die aus einem Material hergestellt ist, das sich von einem Magnesiummaterial unterscheidet, wobei die Nicht-Magnesium-Komponente (12) mit einem Befestigungsloch (15) gebildet ist; und
eine Magnesiumkomponente (20), die aus einem Magnesiummaterial hergestellt ist, wobei die Magnesiumkomponente (20) mit einem Durchgangsloch (23) gebildet ist, das einen größeren Innendurchmesser aufweist als das Befestigungsloch (15) und im Wesentlichen ganz mit einem Isolator beschichtet ist;
**gekennzeichnet durch**
eine Befestigungsvorrichtung gemäß einem der vorhergehenden Ansprüche, die die Nicht-Magnesium-Komponente (12) und die Magnesiumkomponente (20) befestigt.

13. Ein Fahrzeug, das die Anordnung gemäß Anspruch 12 umfasst.

14. Das Fahrzeug gemäß Anspruch 13, wobei:
das Fahrzeug ein Fahrzeug vom rittlings zu fahrenden Typ ist,
die Magnesiumkomponente (20) ein hinterer Rahmen zum Tragen zumindest eines Teils eines Sitzes ist, auf dem ein Fahrer sitzen soll, und die Nicht-Magnesium-Komponente (12) ein weiterer Rahmen zum Tragen des hinteren Rahmens ist.

15. Das Fahrzeug gemäß Anspruch 14, wobei das Fahrzeug ein Motorrad ist.

## Revendications

1. Dispositif de fixation pour un composant de magnésium (20), dans lequel un composant non de magnésium (12) réalisé en un matériau qui est différent d'un matériau de magnésium, le composant non de magnésium (12) étant formé avec un trou de fixation (15) et un composant de magnésium (20) réalisé en un matériau de magnésium, le composant de magnésium (20) étant formé avec un trou traversant (23) ayant un diamètre intérieur supérieur à celui du trou de fixation (15) et sensiblement entièrement revêtu d'un isolant, doivent être fixés l'un à l'autre, le dispositif de fixation comprenant:
un moyen de fixation (71) réalisé en un matériau différent d'un matériau de magnésium, le moyen de fixation (71) présentant une tige (71a) formée avec des filets (71c) au moins partiellement à une extrémité distale de la tige (71a), et une partie de tête (71 b) prévue à une extrémité proximale de la tige (71a) et ayant un diamètre supérieur a celui de la tige (71a), et le moyen de fixation (71) étant configuré pour être introduit depuis le trou traversant (23) dans le trou de fixation (15), pour fixer le composant de magnésium (20) et le composant non de magnésium (12); et
une rondelle annulaire (72) réalisée en un matériau qui ne présente sensiblement pas de corrosion électrolytique lorsqu'il est en contact avec un matériau de magnésium, la rondelle (72) permettant que la tige (71a) du moyen de fixation (71) passe à travers cette première pour être interposée entre la partie de tête (71b) du moyen de fixation (71) et le composant de magnésium (20),
**caractérisé par**
une collerette (73) réalisée en un matériau qui ne présente sensiblement pas de corrosion électrolytique lorsqu'il est en contact avec un matériau de magnésium, la collerette (73) étant configurée pour couvrir au moins partiellement la périphérie de la tige (71a) du moyen de fixation (71) à interposer entre la tige (71a) et une surface périphérique intérieure du trou traversant (23) du composant de magnésium (20);
dans lequel la rondelle (72) est séparée de la collerette (73).

2. Dispositif de fixation selon la revendication 1,
dans lequel la collerette (73) est un élément généralement en forme d'anneau ayant une section en forme de C.

3. Dispositif de fixation selon la revendication 1 ou la revendication 2,
dans lequel la collerette (73) est montée par pression sur la tige (71a) du moyen de fixation (71).

4. Dispositif de fixation selon la revendication 1 ou la revendication 2,
dans lequel la collerette (73) est assemblée par collage ou soudée à la tige (71 a) du moyen de fixation (71).

5. Dispositif de fixation selon l'une quelconque des revendications précédentes, dans lequel la tige (71a) du moyen de fixation (71) présente une partie non filetée intermédiaire entre la tête (71b) du moyen de fixation (71) et les filets (71c).

6. Dispositif de fixation selon la revendication 5, dans lequel la collerette (73) s'étend partiellement le long de la partie non filetée du moyen de fixation (71).

7. Dispositif de fixation selon l'une quelconque des revendications précédentes, comprenant par ailleurs:
un joint torique disposé dans une partie de la tige (71a) du moyen de fixation (71) qui est plus rapproché de l'extrémité distale de ce dernier que la collerette (73).

8. Dispositif de fixation selon l'une quelconque des revendications précédentes,
dans lequel le composant non de magnésium (12) est réalisé en un matériau d'aluminium, et
le moyen de fixation (71) est réalisé en un matériau de fer ou un matériau d'acier inoxydable.

9. Dispositif de fixation selon l'une quelconque des revendications précédentes,
dans lequel la collerette (73) est réalisée en un matériau de résine.

10. Dispositif de fixation selon l'une quelconque des revendications précédentes,
dans lequel la rondelle (72) est réalisée en un matériau de résine.

11. Dispositif de fixation selon l'une quelconque des revendications 1 à 8,
dans lequel la collerette (73) et la rondelle (72) sont réalisées en un matériau d'aluminium.

12. Ensemble comprenant:
un composant non de magnésium (12) réalisée en un matériau qui est différent d'un matériau de magnésium, le composant non de magnésium (12) étant formé avec un trou de fixation (15); et
un composant de magnésium (20) réalisé en un matériau de magnésium, le composant de magnésium (20) étant formé avec un trou traversant (23) ayant un diamètre intérieur supérieur à celui du trou de fixation (15) et sensiblement entièrement revêtu d'un isolant;
**caractérisé par**
un dispositif de fixation selon l'une quelconque des revendications précédentes fixant le composant non de magnésium (12) et le composant de magnésium (20).

13. Véhicule comportant l'ensemble selon la revendication 12.

14. Véhicule selon la revendication 13, dans lequel:
le véhicule est un véhicule du type à monter,
le composant de magnésium (20) est un cadre arrière destiné à supporter au moins une partie d'un siège sur lequel doit s'asseoir un conducteur, et le composant non de magnésium (12) est un autre cadre destiné à supporter le cadre arrière.

15. Véhicule selon la revendication 14, dans lequel le véhicule est une motocyclette.
